(19) Europäisches Patentamt
European Patent Office
Office européen des brevets

(11) **EP 3 415 881 A1**

(12) **EUROPEAN PATENT APPLICATION**

(43) Date of publication:
**19.12.2018 Bulletin 2018/51**

(51) Int Cl.:
**G01J 3/02** (2006.01)    **G01J 3/28** (2006.01)
**G01J 3/45** (2006.01)

(21) Application number: **18177028.0**

(22) Date of filing: **11.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.06.2017 JP 2017117462**

(71) Applicant: **Horiba, Ltd.**
**Kyoto-shi, Kyoto 601-8510 (JP)**

(72) Inventor: **ANDO, Yoshitake**
**Kyoto, 601-8510 (JP)**

(74) Representative: **Müller Hoffmann & Partner**
**Patentanwälte mbB**
**St.-Martin-Strasse 58**
**81541 München (DE)**

(54) **ARITHMETIC EXPRESSION CALCULATION METHOD FOR CORRECTING OUTPUT OF PHOTO DETECTOR AND OUTPUT CORRECTION METHOD OF PHOTO DETECTOR**

(57)    This invention is to make it possible to correct an output (make a calibration curve) of a photo detector used for an optical analyzer without using a plurality of optical filters in a short period of time with a simple arrangement. A method of this invention obtains a linear output value that is obtained by linearly correcting the output value of the photo detector that detects the light of the first intensity wherein the output of the photo detector becomes non-linear in such a way that the relationship between the output value and the light of the first intensity becomes linear, obtains a non-linear output value as being an output value of the photo detector that detects the light of the second intensity whose output of the photo detector becomes non-linear, and obtains an arithmetic expression to linearly correct the non-linear output value to become a linear relationship between the non-linear output value and the light of the second intensity using the linear output value and the non-linear output value as parameters.

Y AXIS: OUTPUT OF DETECTOR

X AXIS: INTENSITY OF INCIDENT LIGHT (RELATIVE VALUE)

IN CASE INCIDENT LIGHT INTENSITY IS SMALL, ALMOST LINEAR

IN CASE INCIDENT LIGHT INTENSITY BECOMES BIG, STRONG NON-LINEAR TENDENCY

FIG. 1

EP 3 415 881 A1

## Description

### FIELD OF THE ART

This invention relates to an arithmetic expression calculation method for correcting an output of a photo detector and an output correction method of the photo detector that is used for an optical analyzer such as a Fourier-transform infrared spectroscopy (FTIR).

### BACKGROUND ART

A spectroscopic analyzer such as an FTIR analyzes a specimen component based on a wave number intensity distribution (optical spectrum) of the light passing a specimen. A photo detector such as an MCT photo detector is used in order to detect the intensity of the light passing the specimen, however, as a matter of course it is necessary to obtain a relationship (calibration curve) between the output value and the intensity of the incident light prior to the analysis.

Conventionally, the calibration curve is created by obtaining an output value of a photo detector into which a predetermined reference light enters.

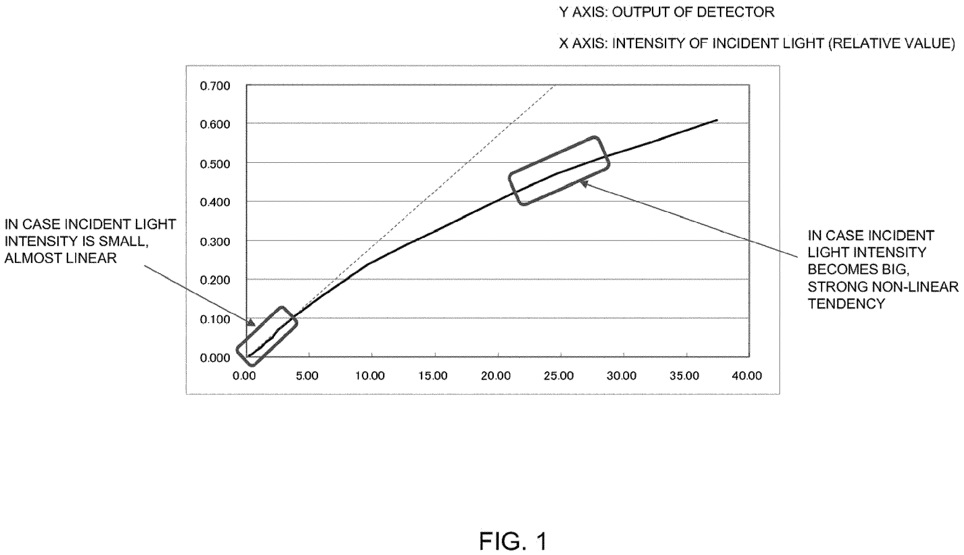

Taking the MCT photo detector as an example, in case that the intensity of the incident light is the predetermined value or less, as shown in Fig. 1, the relationship between the output value and the intensity of the incident light becomes linear (proportional). Accordingly, it is relatively easy to create the calibration curve since an offset and a span should be obtained as far as the intensity is the predetermined value or less.

However, in case that the intensity of the incident light is more than the predetermined value, as shown in Fig. 1, the relationship becomes nonlinearly. Accordingly, in order to obtain an accurate calibration curve, it is necessary to prepare a lot of reference light whose intensity differs each other and to measure each output value. Concretely, it takes about 10 minutes to measure the output value at one point and it is necessary to measure the output value at several points (for example, 10 points or more). Then it takes a lot of man-hours (time) such as several hours just to create the calibration curves and there will be a problem to require a certain level of facilities as well. In addition, there will be another problem that it is difficult to conduct an inspection of the calibration curve or recreation of the calibration curve in a product delivery destination at a time of maintenance or repair due to the problem of the man-hours or the facilities. This is not only a problem for the MCT photo detector but also a common problem for other kinds of the photo detectors.

### PRIOR ART DOCUMENT

Patent document

Patent document 1: Japanese Unexamined Patent Application Publication No. 2017 - 26506

### DISCLOSURE OF THE INVENTION

### PROBLEMS TO BE SOLVED BY THE INVENTION

In order to solve these problems, as shown in the patent document 1, this inventor conceives a method wherein the light emitted from the light source enters the photo detector in both cases that the optical filter is arranged on the optical path and that no optical filter is arranged on the optical path, the first output value and the second output value as being the output value of the photo detector for each light of the multiple wave numbers contained in the incident light and an arithmetic expression (a calibration curve) is obtained to calculate the intensity of the incident light based on the output value of the photo detector using a ratio of the first output value to the second output for each of the predetermined wave numbers and the optical property of the optical filter as parameters.

However, this output correction method is one-point correction using one optical filter. Then, in case that the intensity of the light that enters the photo detector changes, the intensity of the incident light is calculated based on the light intensity that is different from the actual light intensity, resulting in measurement error. It can be conceived that the arithmetic expression is obtained for each of the different light intensity by using multiple optical filters whose optical property differs each other, thereby complicating the device configuration.

The present claimed invention intends to solve all of the problems and a main object of this invention is to make it possible to correct an output (make a calibration curve) of a photo detector used for an optical analyzer without using a plurality of optical filters in a short period of time with a simple arrangement.

### MEANS TO SOLVE THE PROBLEMS

More specifically, an arithmetic expression calculation method to linearly correct a photo detector in accordance with this invention is a method that is used for an optical analyzer comprising the photo detector wherein a relationship between intensity of incident light and an output value of the photo detector becomes linear within a predetermined range, and that is characterized by obtaining a linear output value that is obtained by linearly correcting the output value of the photo detector that detects the light of the first intensity wherein the output of the photo detector becomes non-linear in such a way that the relationship between the output value and the light of the first intensity becomes linear, and obtaining a non-linear output value as being an output value of the photo detector that detects the light of the second intensity whose output of the photo detector becomes non-linear, and by obtaining an arithmetic expression to linearly correct the non-linear output value in such a way that a relationship between the non-linear output value and the light of the second intensity becomes linear using the linear output value and the non-linear output value as parameters.

The arithmetic expression includes not only a numerical expression to linearly correct the non-linear output value but also a map or a look-up table, and may be also called a calibration curve.

In accordance with the above-mentioned arrangement, it is possible to obtain the arithmetic expression for calculating the output value in case that the output value of the photo detector that detects the light whose intensity is non-linear is corrected and the photo detector outputs the corrected linear output value just by obtaining the linear output value that is obtained by linear correction and the non-linear output value. For example, if the light from a light source is considered to be the light of the first intensity, and a total of the light other than the light from the light source and the light from the light source is considered to be the light of the second intensity, it is possible to obtain the above-mentioned arithmetic expression. With this arrangement, it is possible to correct the output of the photo detector without using a plurality of optical filters in a short period of time with a simple arrangement.

In order to make it possible to calculate the intensity of the light even though the intensity of the light that enters the photo detector changes, it is preferable that the arithmetic expression is obtained for each intensity wherein the output of the photo detector becomes non-linear.

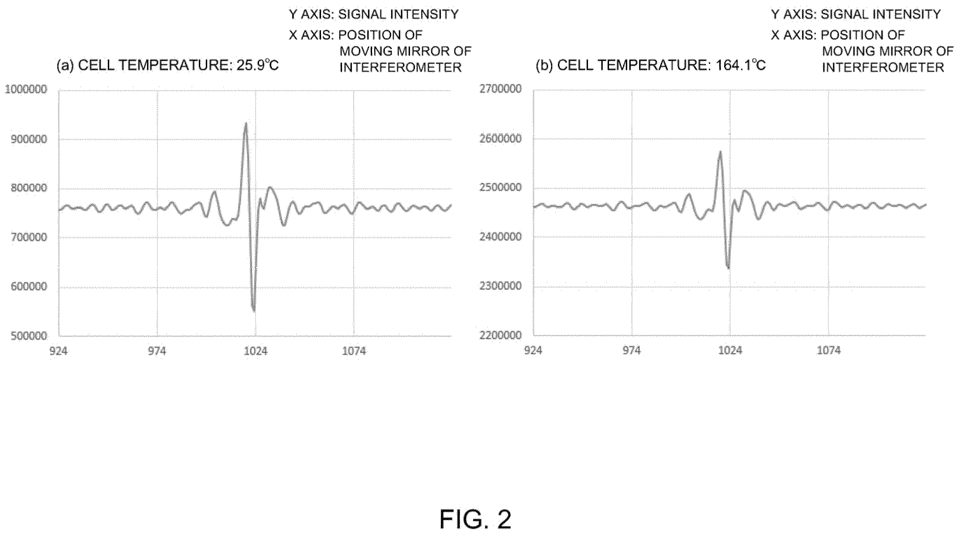

In addition, if case that the optical analyzer further comprises a measurement cell on which the light from the light source is irradiated, the infrared radiation of the measurement cell changes in accordance with the temperature change. Accordingly, the intensity of the light that enters the photo detector changes. Fig. 2 shows the output value from the photo detector in case that the measurement cell is at 25.9 °C and the output value from the photo detector in case that the measurement cell is at 164.1°C. This output value is obtained in a configuration where an interferometer is arranged between the light source and the measurement cell, and Fig. 2 shows a state that the output value of the photo detector changes in accordance with a position of the moving mirror or the interferometer. In addition, the sample gas in the measurement cell is the same at both temperatures and the condition is the same other than the temperature. As is clear from Fig. 2, the direct current offset component (DC component) of the output value of the photo detector changes because it depends on the infrared radiation from the measurement cell between cases that the measurement cell is 25.9 °C and 164.1°C. Meanwhile, in case that the output property of the photo detector is linear, the vibrational component (non DC component) due to the interferometer should be equal at any temperature, however, actually amplitude of the non DC component becomes small at 164.1 °C. This results from the output property of the photo detector being non-linear.

As mentioned, in case that the light intensity of the photo detector changes due to the infrared radiation of the measurement cell, it is preferable that the light that enters the photo detector is set to be the light of the intensity wherein the output of the photo detector is non-linear by changing the infrared light emitted from the measurement cell by changing the temperature of the measurement cell, and the non-linear output value is obtained in this state. In accordance with this arrangement, it is possible to obtain the arithmetic expression for each temperature (each light intensity) during changing the measurement condition by changing the temperature of the measurement cell.

As an optical detecting device conceived is the optical analyzer that further comprises an analyzing part that calculates a light intensity signal for each light of multiple predetermined wave numbers contained in the incident light based on the output value obtained by the photo detector. In case of this arrangement, it can be conceived that both the linear output value and the non-linear output value are the output value of the photo detector for each light of the multiple predetermined wave numbers contained in the incident light. The wave number also contains a wave length of its invers number.

Concretely, it can be represented by the arithmetic expression that satisfies the following expression in a predetermined range.

$$Y_{linear}(k) = C(y) \cdot Y_{non\text{-}linear}(k)$$

where, k is the wave number, $Y_{linear}(k)$ is the above-mentioned linear output value, $Y_{non\text{-}linear}(k)$ is the non-linear output value, y is the output value of the photo detector and C(y) is the above-mentioned arithmetic expression.

It is preferable that the linear output value is obtained by the use of an initial arithmetic expression obtained by the following (a) ~ (c) steps.

(a) The first output value as being an output value of the above-mentioned photo detector for each light of multiple predetermined wave numbers contained in the incident light is obtained by entering the light of the light source into the photo detector through an optical element whose wave number transmission property or wave number reflectance property is known in such a way that the intensity of the light falls within the above-mentioned range.

(b) The second output value as being an output value of the above-mentioned photo detector for each light of the multiple predetermined wave numbers contained in the incident light is obtained by entering the light emitted from the light source into the above-mentioned photo detector without any optical element.

(c) An initial arithmetic expression is obtained to linearly correct the output value of the above-mentioned photo detector that detects the light of the intensity that falls out of the above-mentioned range in such a way that the relationship between the output value and the light of the intensity that falls out of the above-mentioned range becomes linear using a ratio of the first output value to the second output value and the wave number transmission property or the wave number reflectance property of the optical element as the parameters.

Concretely, it can be represented that the arithmetic expression calculation method wherein the initial arithmetic expression satisfies the following expression in a predetermined range.

$$Y_1(k) / \{C(y) \bullet Y_2(k)\} = F(k)$$

where, k is the wave number, $Y_1(k)$ is the above-mentioned first output value, $Y_2(k)$ is the above-mentioned second output value, F (k) is the wave number transmission property or the wave number reflectance property of the above-mentioned optical element, y is the output value of the photo detector and C (y) is the above-mentioned arithmetic expression.

In addition, the output correction method of a photo detector in accordance with this invention is characterized by comprising an arithmetic expression calculation step to calculate the arithmetic expression by the above-mentioned arithmetic expression calculation method and a correction step to linearly correct the output of the photo detector.

Furthermore, the optical analyzer in accordance with this invention is an optical analyzer that comprises a photo detector wherein a relationship between intensity of incident light and an output value of the photo detector becomes linear in a predetermined range, and is characterized by further comprising an output value obtaining part that obtains a linear output value obtained by linearly correcting the output value of the photo detector that detects the light of the first intensity wherein the output of the photo detector is non-linear in such a way that the relationship between the output value and the light of the first intensity becomes linear and that obtains a non-linear output value as being the output value of the photo detector that detects the light of the second intensity wherein the output of the photo detector becomes non-linear, and an arithmetic expression calculation part that calculates an arithmetic expression to calculate an output value in case that the photo detector linearly outputs the light of the intensity to be the non-linear output by correcting the non-linear output value using the linear output value and the non-linear output value as parameters.

In addition, the optical analyzer in accordance with this invention is preferably to further comprise a light source, a measurement cell on which the light from the light source is irradiated, and a temperature adjusting mechanism to adjust temperature of the measurement cell, and the light that enters the photo detector is set to be the light of the intensity wherein the output of the photo detector is non-linear by changing the infrared light emitted from the measurement cell by changing the temperature of the measurement cell by the use of the temperature adjusting mechanism, and the output value obtaining part obtains the non-linear output value in this state.

Furthermore, the output correction device in accordance with this invention is an output correction device that corrects an output of a photo detector wherein a relationship between incident light intensity and an output value of the photo detector becomes linear within a predetermined range, and is characterized by comprising an output value obtaining part that obtains a linear output value obtained by linearly correcting the output value of the photo detector that detects the light of the first intensity wherein the output of the photo detector is non-linear in such a way that the relationship between the output value and the light of the first intensity becomes linear and that obtains a non-linear output value as being the output value of the photo detector that detects the light of the second intensity wherein the output of the photo detector is non-linear, an arithmetic expression calculation part that calculates an arithmetic expression to calculate an output value in case that the photo detector linearly outputs the light of the intensity to be the non-linear output by correcting the non-linear output value using the linear output value and the non-linear output value as parameters, and a correcting part that linearly corrects the output of the photo detector by the use of the arithmetic expression obtained in the arithmetic expression calculation part.

**EFFECT OF THE INVENTION**

In accordance with this invention having the above-mentioned arrangement, it is possible to obtain the arithmetic expression for calculating the output value in case that the output value of the photo detector that detects the light whose intensity is non-linear is corrected and the photo detector outputs the corrected linear output value just by obtaining the linear output value that is obtained by linear correction and the non-linear output value.

**BRIEF DESCRIPTION OF THE DRAWINGS**

Fig. 1 is a characteristic diagram showing a relationship between the intensity of the incident light and the output value of the MCT photo detector.
Fig. 2 is a view showing the output values of the MCT photo detector whose cell temperature is 25.9 °C and 164.1°C.
Fig. 3 is a pattern diagram showing a whole of the spectroscopic analyzer in one embodiment of this invention.

Fig. 4 is a flow chart of the output calibration method of this embodiment.

Fig. 5 is a spectrum diagram showing the wave number transmission property and the measurement points of the optical filter in this embodiment.

Fig. 6 is a spectrum diagram showing the output value for each wave number of the photo detector.

## BEST MODES OF EMBODYING THE INVENTION

One embodiment of an optical analyzer in accordance with this invention will be explained with reference to drawings.

<Device configuration>

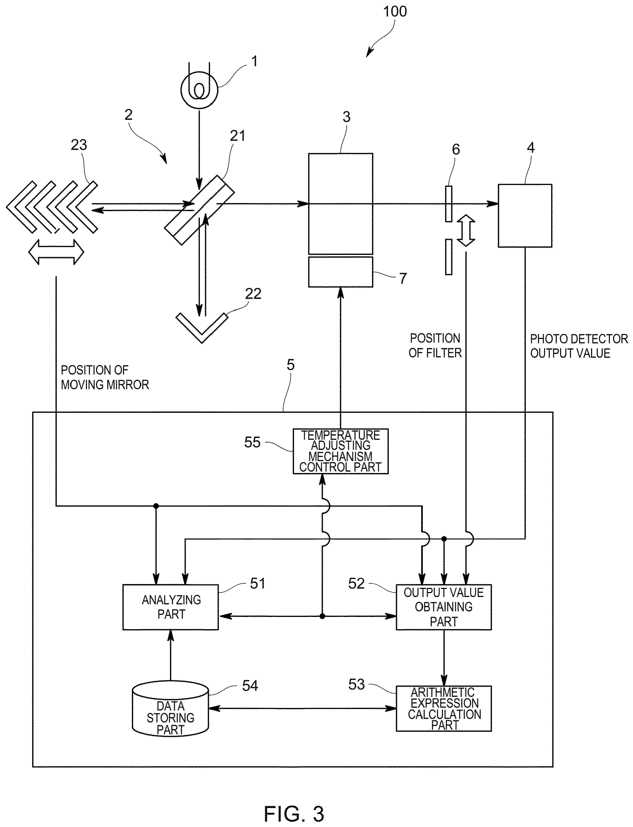

The optical analyzer 100 of this embodiment is a Fourier-transform infrared spectroscopy, so-called FTIR 100, and as shown in Fig. 3, comprises a light source 1, an interferometer 2, a measurement cell 3, a photo detector 4 and an arithmetic processing unit 5.

The light source 1 emits light (continuous light containing light having multiple wave numbers) having a broad spectrum, and for example, a tungsten • iodine lamp or a high-brightness ceramic light source is used.

The interferometer 2 makes use of, a so-called Michelson interferometer comprising a half mirror (a beam splitter) 21, a fixed mirror 22 and a moving mirror 23. The light that is from the light source 1 and that enters the interferometer 2 is divided into reflected light and transmitted light by the half mirror 21. One light is reflected by the fixed mirror 22 and the other light is reflected by the moving mirror 23 and both of them return to the half mirror 21 again and are combined and emitted from the interferometer 2.

The measurement cell 3 is a cell to which a gas (hereinafter also called as a sample gas) as being an object to be measured is introduced and the light from the interferometer 2 is transmitted in the sample in the measurement cell 3 and is introduced into the photo detector 4. The measurement cell 3 comprises a cell body having a cylindrical shape made of a metal such as aluminum and a window member that is arranged on both walls of the cell body and that is made of a translucent material such as quartz glass.

The photo detector 4 in this embodiment is a so-called MCT photo detector 4.

The arithmetic processing unit 5 comprises an analog electric circuit having a buffer and an amplifier, a digital electric circuit having a CPU, a memory and a DSP and an A/D convertor arranged therebetween. The arithmetic processing unit 5 calculates a spectrum of the light that is transmitted in the sample gas based on an output value of the photo detector 4 and produces a function as an analysis part 51 that analyzes the sample by obtaining light absorbance of each wave number based on the optical spectrum by cooperatively working the CPU and its peripheral devices according to predetermined programs stored in the memory.

The analysis part 51 calculates the optical spectrum as follows.

If the moving mirror 23 is moved back and the intensity of the light that is transmitted in the sample gas is monitored with a position of the moving mirror 23 placed on the x axis, in case that the light is a single wave number, the light intensity draws a sine curve due to interference. Meanwhile, since the actual light that is transmitted in the specimen is the continuous light, the sine curve differs from each wave number and the actual light intensity becomes superimposition of the sine curves drawn by each wave number so that the interference pattern (interferogram) becomes a shape of a wave packet.

The analysis part 51 obtains the position of the moving mirror 23 by a speed distance meter such as a He Ne laser (not shown in drawings), and the light intensity at each position of the moving mirror 23 by the photo detector 4. The analysis part 51 conducts the fast Fourier transform (FFT) on the obtained interference pattern and transforms the obtained interference pattern into the optical spectrum with each wave number component placed on the x axis and the light intensity signal placed on the y axis.

At this time the intensity of the light that is transmitted in the specimen, namely, the light that enters the photo detector 4 is calculated based on the output value of the photo detector 4. In order to calculate the light intensity it is necessary to previously obtain a relationship (a calibration curve) between the output value of the photo detector 4 and the intensity of the incident light and to store the relationship in the memory. The calibration curve in this embodiment is an arithmetic expression to transform the output value of the photo detector 4 into the intensity of the incident light, however, it may be a table or a map.

In this embodiment, the measurement cell 3 is so configured to be able to be adjusted in multistage, and the optical analyzer 100 comprises a temperature adjusting mechanism 7 to adjust the temperature of the measurement cell 3 and a temperature adjusting mechanism control part 55 to control the temperature adjusting mechanism 7.

The temperature adjusting mechanism 7 is a heater such as a heating wire arranged to surround the measurement cell 3. In addition, the temperature adjusting mechanism control part 55 controls the heating temperature of the measurement cell 3 due to the heater 7 by controlling a power source circuit that supplies the electric power to the heater 7. For example, the temperature adjusting mechanism control part 55 controls the temperature of the measurement cell 3 to be 25.9 °C (low temperature) and 164.1°C (high temperature).

In this embodiment, the calibration curve (the arithmetic expression) is obtained for each temperature of the measurement cell 3. Concretely, both the calibration curve (the arithmetic expression) at 25.9 °C (low temperature) and the calibration curve at 164.1°C (high temperature) are obtained. A method for obtaining the arithmetic expression at 25.9 °C (low temperature) obtained by the use of the optical filter 6 as being an optical element and the arithmetic expression at 164.1 °C (high temperature) obtained without using the optical filter 6 will be explained.

(A) A method for calculating the arithmetic expression at 25.9 °C (low temperature)

In this embodiment, in order to previously obtain the arithmetic expression at the low temperature, a following mechanism is provided for the optical analyzer 100.

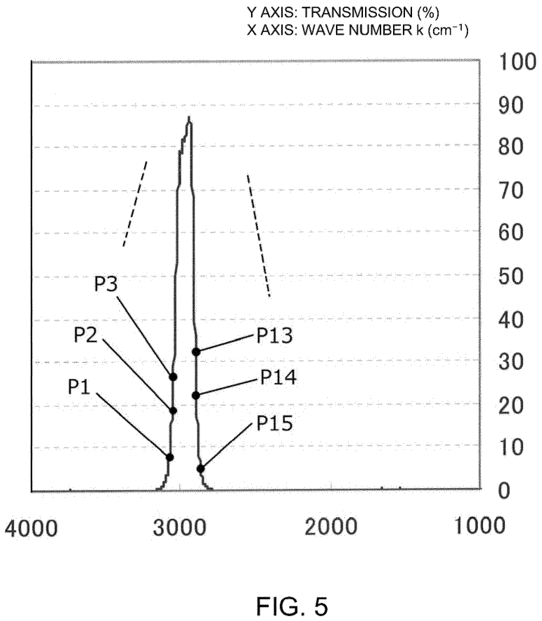

First, as shown in Fig. 3, the optical filter 6 of a plate shape is arranged in a detachable manner on an optical path from the measurement cell 3 to the photo detector 4. In this embodiment, the optical filter 6 is a so-called band-path filter having the wave number transmission property as shown in Fig. 5. The optical filter 6 is movably supported by a filter supporting member of a plate shape that is slidably mounted on a casing.

In addition, as shown in Fig, 3, the arithmetic processing device 5 is further provided with an output value obtaining part 52 and an arithmetic expression calculation part 53.

The output value obtaining part 52 obtains the first output value as being an output value for each wave number of the photo detector 4 at a time when the light from the measurement cell 3 passes the optical filter 6 and enters the photo detector 4, and obtains the second output value as being an output value for each wave number of the photo detector 4 at a time when the light from the measurement cell 3 enters the photo detector 4 without passing the optical filter 6. The output value obtaining part 52 stores the obtained first output value and the second output value in a data storing part 54 arranged in a predetermined area of the memory. The output value obtaining part 52 also obtains a third output value as being an output value of the photo detector 4 when the light from the measurement cell 3 is shut off.

The arithmetic expression calculation part 53 obtains an arithmetic expression to calculate an output value in case that the photo detector 4 linearly outputs the light (the light without passing the above-mentioned optical filter 6) having the intensity that falls out of the linearly range by correcting the first output value of the photo detector 4 using the wave number transmission property of the optical filter 6 that is previously stored in the data storing part 54 as a parameter in addition to the first output value and the second output value, and stores the obtained arithmetic expression in the data storing part 54.

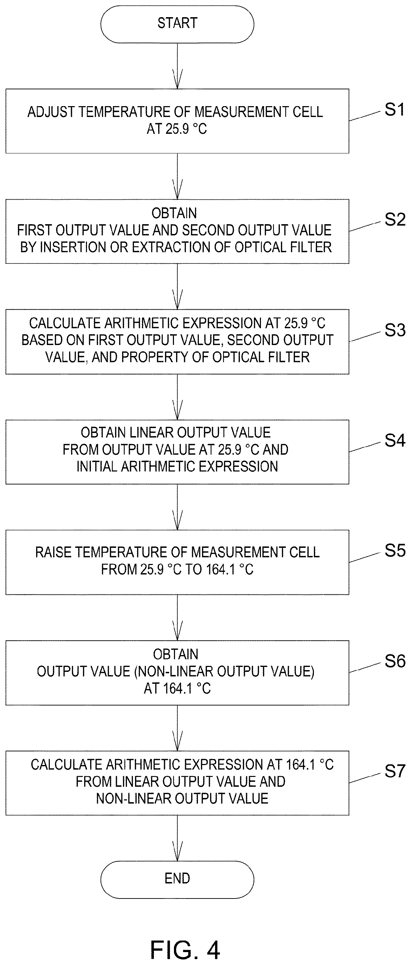

One example of the operation to obtain the arithmetic expression at the low temperature using this mechanism will be explained in detail with reference to Fig. 4.

First, the measurement cell 3 is filled with the sample whose state such as temperature, component concentration and pressure is constant. In addition, the temperature of the measurement cell 3 is controlled at 25.9 °C by the temperature adjusting mechanism (Step S1). The reason why these states are made constant is not to change the spectrum of the light that is transmitted in the sample. The sample is preferably a material whose absorbency of the infrared light is small, and for example, nitrogen gas. The measurement cell 3 may not be filled with any sample, and may be evacuated.

Next, an operator places the optical filter 6 on the optical axis. Then, in a state that the light source 1 is lighted and the moving mirror 23 is moving, when the operator conducts a predetermined first arithmetic operation initiation operation by the use of a mouse or a keyboard, the output value obtaining part 52 detects this operation and receives • obtains the output value (interferogram) of the photo detector 4 at each position of the moving mirror 23. At this time, the output value obtaining part 52 corrects the offset of the interferogram by subtracting the output value of the photo detector 4 at a time when the incident light to the photo detector 4 is shut down.

Next, the output value obtaining part 52 calculates the first output value $Y_1$ (k) as being the output value of the photo detector 4 for each wave number by conducting the Fast Fourier Transform on the offset corrected interferogram, and stores the first output value $Y_1$ (k) in the data storing part 54 (Step S2). "k" indicates the wave number.

Next, the operator moves off the optical filter 6 from the optical axis. Then, when the operator conducts a predetermined second arithmetic operation initiation operation, the output value obtaining part 52 detects this operation and obtains the output value (interferogram) of the photo detector 4 at each position of the moving mirror 23. At this time, similar to the above-mentioned, the output value obtaining part 52 corrects the offset of the interferogram by subtracting the output value of the photo detector 4 at a time when the incident light to the photo detector 4 is shut down.

Later, the output value obtaining part 52 calculates the second output value $Y_2$ (k) as being the output value of the photo detector 4 for each wave number by conducting the Fast Fourier Transform on the offset corrected interferogram, and stores the calculated second output value $Y_2$ (k) in the data storing part 54 (Step S2).

Next, the arithmetic expression calculation part 53 obtains the first output value $Y_1$ (k) and the second output value $Y_2$ (k) at the predetermined multiple wave numbers (for example, 15 points, $P_1 \sim P_{15}$ in Fig. 5) from the data storing part 54, and obtains the arithmetic expression $C_{25.9°C}$ (y) that satisfies the following evaluation function by, for example, an optimization method (Step S3).

The evaluation function is expressed by the expression (1).

$$Y_1(k) / \{C_{25.9\,^\circ C}(y) \bullet Y_2(k)\} = F(k) \bullet \bullet \bullet (1)$$

where F(k) is the transmittance (filter characteristic) of the optical filter 6 for each wave number, and y is the output value of the photo detector 4. $C_{25.9\,^\circ C}(y)$ is the expression expressed by, for example, the follow expression (2) wherein y is a variable and the form other than the coefficient is a previously determined numerical expression.

$$C_{25.9\,^\circ C}(y) = C_1 \bullet y + C_2 \bullet y^2 + C_3 \bullet y^3 \bullet \bullet \bullet (2)$$

For the above-mentioned arithmetic expression calculation part 53, coefficients $C_1 \sim C_3$ are obtained by the use of the known optimization method. Thus obtained arithmetic expression $C_{25.9\,^\circ C}(y)$ at the low temperature is stored in the data storing part 54.

(B) A method for calculating the arithmetic expression at 164.1°C (high temperature)

In this embodiment, the temperature adjusting mechanism control part 55 raises the temperature of the measurement cell 3 from 25.9 °C to 164.1 °C by controlling the temperature adjusting mechanism 7 in order to previously obtain the arithmetic expression at the high temperature. In this process of raising the temperature, the optical filter 6 is evacuated.

In addition, the output value obtaining part 52 obtains the following two kinds of the output. Then the output value obtaining part 52 stores the two kinds of the output in the data storing part 54 provided in the predetermined area of the memory.

(1) A linear output value obtained by linearly correcting the output value of the photo detector 4 that detects the light of the first intensity wherein the output of the photo detector 4 becomes non-linear in such a way that a relationship between the output value and the light of the first intensity becomes linear. In this embodiment, this value is a value obtained by making the light of the first intensity as being the light of the light source 1 and wherein the output value of the photo detector 4 becomes non-linear enter the photo detector 4 and by linearly correcting the output value of the photo detector 4 that detects the incident light for each wave number. Concretely, the linear output value is a value that is obtained by linearly correcting the output value of the photo detector 4 by the use of the above-mentioned arithmetic expression $C_{25.9\,^\circ C}(y)$ in case that the measurement cell 3 is adjusted at 25.9 °C.

(2) A non-linear output value as being the output value of the photo detector 4 that detects the light of the second intensity (different from the above-mentioned first intensity) wherein the output of the photo detector 4 becomes non-linear. In this embodiment, this value is an output value of the photo detector 4 for each wave number when the photo detector 4 detects an incident light that enters the photo detector 4 by making the light of the second intensity that is a total of the light from the light source 1 and the light from other than the light source 1 and wherein the output value obtained by the photo detector 4 becomes non-linear enter the photo detector 4. Concretely, in addition to the light from the light source 1, the light of the second intensity wherein the output of the photo detector 4 becomes non-linear due to the infrared radiation (infrared light) that increases by raising the temperature of the measurement cell 3 from 25.9 °C to 164.1 °C is formed and the light of the intensity as being the non-linear output enters the photo detector 4.

The arithmetic expression calculation part 53 corrects the above-mentioned non-linear output value using the linear output value and the non-linear output value as parameters, obtains the arithmetic expression to calculate the output value in case that the photo detector 4 linearly outputs the light of the above-mentioned second intensity and stores the obtained arithmetic expression in the data storing part 54.

One example of the operation to obtain the arithmetic expression at the high temperature by the use of this mechanism will be explained in detail with reference to Fig. 4.

In this embodiment, the above-mentioned linear output value $Y_{linear}(k)$ uses a value corrected by the use of the above-mentioned arithmetic expression $C_{25.9\,^\circ C}(y)$ at the low temperature (Step S4).

After completing the process of obtaining the above-mentioned arithmetic expression $C_{25.9\,^\circ C}(y)$ at the low temperature, the temperature of the measurement cell 3 is controlled to adjust from 25.9 °C to 164.1 °C by the temperature adjusting mechanism 7 (Step S5).

Then, in a state that the light source 1 is lighted and the moving mirror 23 is moving, when the operator conducts a predetermined third calculation initiation operation by the use of a mouse or a keyboard, the output value obtaining part 52 detects this operation and receives • obtains the output value (interferogram) of the photo detector 4 at each position of the moving mirror 23.

Later, the output value obtaining part 52 calculates the non-linear output value Y non-linear (k) as being the output value of the photo detector 4 for each wave number by conducting the Fast Fourier Transform on the interferogram, and stores the calculated non-linear output value $Y_{non-linear}(k)$ in the data storing part 54 and terminates the operation (Step S6).

Next, the arithmetic expression calculation part 53 obtains the linear output value $Y_{linear}(k)$ and the non-linear output value $Y_{non-linear}(k)$ at the predetermined multiple wave numbers (for example, 15 points) from the data storing part 54, and obtains the arithmetic expression $C_{164.1°C}$ (y) that satisfies the following evaluation function by, for example, an optimization method (Step S7).

The evaluation function is expressed by the expression (3).

$$Y_{linear}(k) = C_{164.1°C}(y) \bullet Y_{non\text{-}linear}(k) \bullet \bullet \bullet (3)$$

where y is the output value of the photo detector. $C_{164.1°C}$ (y) is the expression expressed by the follow expression (4) wherein y is a variable and the form other than the coefficient is a previously determined numerical expression.

$$C_{164.1°C}(y) = C_1' \bullet y + C_2' \bullet y^2 + C_3' \bullet y^3 \bullet \bullet \bullet (4)$$

For the above-mentioned arithmetic expression calculation part 53, the coefficients $C_1' \sim C_3'$ are obtained by the use of the known optimization method. Thus obtained arithmetic expression $C_{164.1°C}$ (y) at the high temperature is stored in the data storing part 54. In the above-mentioned expression (3), ($Y_{linear}'(k)$) that is amplified by a predetermined ratio (for example, a factor of 0.9 or a factor of 1.1) may be used as $Y_{linear}(k)$.

In case of analyzing the sample gas by the use of the measurement cell 3 at the low temperature (25.9 °C), the analyzing part 51 corrects the output value y (interferogram) of the photo detector 4 at each position of the moving mirror 23 by the use of the arithmetic expression $C_{25.9°C}$ (y) stored in the data storing part 54. Concretely, a correction detector output value x, namely the light intensity x is calculated by multiplying the $C_{25.9°C}$ (y) by the output value y of the photo detector 4. Then the optical spectrum is calculated by conducting the fast Fourier transform (FFT) on the correction detector output value x, and the sample is analyzed by obtaining the absorbance of the light of each wave number based on the optical spectrum.

In addition, in case of analyzing the sample gas by the use of the measurement cell 3 at the high temperature (164.1 °C), the analyzing part 51 corrects the output value y (interferom) of the photo detector 4 at each position of the moving mirror 23 by the use of the arithmetic expression $C_{164.1°C}$ (y) stored in the data storing part 54. Concretely, a correction detector output value x, namely the light intensity x is calculated by multiplying the $C_{164.1°C}$ (y) by the output value y of the photo detector 4. Then the optical spectrum is calculated by conducting the fast Fourier transform (FFT) on the correction detector output value x, and the sample is analyzed by obtaining the absorbance of the light of each wave number based on the optical spectrum.

(C) Verification of validity of the arithmetic expression

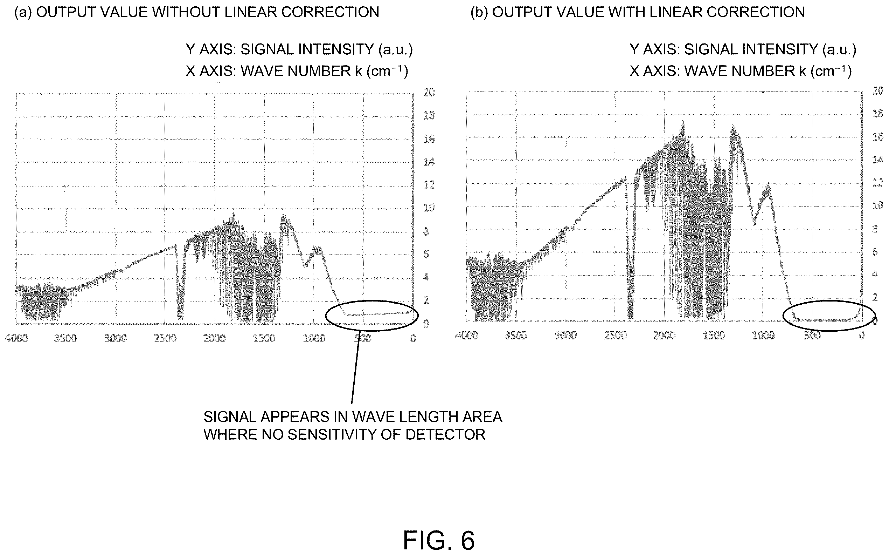

The output value for each wave number of the photo detector 4 obtained without conducting the linear correction is shown in Fig. 6(a), and the output value for each wave number of the photo detector 4 obtained by conducting the linear correction is shown in Fig. 6(b). For the output value obtained without the linear correction, a signal appears in the wavelength region (100 ~ 600 cm$^{-1}$) where originally there is no detector sensitivity. Meanwhile, no signal appears for the linearly corrected output value in the wavelength region where there is no detector sensitivity.

According to this, in the output value that is linearly corrected by the use of the arithmetic expression obtained by the above-mentioned (A) and (B), if a signal appears in the wavelength region (100 ~ 600 cm$^{-1}$) where there is no detector sensitivity, or the signal value is more than or equal to the predetermined threshold value, it is judged that the arithmetic expression is not reasonable. This judgment may be conducted by a man or may be automatically judged by a judging part arranged for the arithmetic processing device 5. In addition, in case that the arithmetic expression is judged not to be reasonable, the above-mentioned (A) and (B) processes may be conducted and the arithmetic expression may be obtained again.

<Effect of this embodiment>

In accordance with this embodiment having this arrangement, it is possible to obtain the arithmetic expression to calculate the output value in case that the photo detector 4 linearly outputs the output value by correcting the output value of the photo detector 4 that detects the non-linear light of the second intensity just by obtaining the linear output value that is obtained by the linear correction and the non-linear output value. In this embodiment, the above-mentioned arithmetic expression can be obtained by setting the light from the light source 1 as the light of the first intensity and the total of the light from the light source 1 and the light from other than the light source 1 as the light of the second intensity. Accordingly, it is possible to correct the output of the photo detector 4 in a short period of time with a simple arrangement without using a plurality of optical filters.

Especially in this embodiment, in accordance with the arrangement wherein the temperature of the measurement cell 3 is adjusted in multiple stages, since it is possible to obtain the light of the second intensity whose output value of the photo detector 4 becomes non-linear by making use of the infrared radiation of the measurement cell 3, there is no need of using a plurality of optical filters whose optical property differs each other and it is possible to make the output correction expression of the photo detector 4, namely to make the above-mentioned arithmetic expression in a short period of time with a simple arrangement.

In addition, as a result of this, there will be a merit that it is possible to inspect or reconstruct a calibration curve with ease at a time of adjusting the temperature of the measurement cell 3.

<Other modified embodiment>

The present claimed invention is not limited to the above-mentioned embodiment.

For example, in the above-mentioned embodiment, the arithmetic expressions are obtained in two stages at the low temperature and at the high temperature respectively, however, in case of adjusting the temperature in more than or equal to three stages or steplessly, the arithmetic expression may be obtained at each temperature. Concretely, the temperature of the measurement cell 3 is changed to raise from the low temperature to the high temperature at multiple stages, the process that is the same as that of the above-mentioned embodiment (2) is conducted at each temperature, and then the arithmetic expression is obtained for each temperature. In short, the arithmetic expression may be obtained in the temperature (light intensity) wherein the relationship between the output value and the light intensity is non-linear by comparing the temperature (light intensity) wherein the relationship between the output value and the light intensity is linear (linear output) and the arithmetic expression is already obtained with the temperature (light intensity) wherein the relationship between the output value and the light intensity is non-linear (non-linear output) and the arithmetic expression is not obtained. Even if the temperature is adjusted in multiple stages from the high temperature to the low temperature or steplessly, it is possible to obtain the arithmetic expression in the same way. It can be conceived that an initial arithmetic expression prior to the temperature change is obtained by the use of the optical filter similar to the above-mentioned embodiment (1). In addition, the arithmetic expression may be previously obtained for each range of the output value of the photo detector and may switch the arithmetic expression in accordance with the output value of the photo detector.

In the above-mentioned embodiment, the arithmetic expression is obtained by the use of the output value for each wave number of the photo detector 4, however, the arithmetic expression may be obtained by the use of the interferogram obtained by the photo detector 4.

The interferogram has a direct current offset component (DC component) and a vibrational component (non DC component). The waveform of the vibrational component (non DC component) should be the same for both cases that the temperature of the measurement cell is 25.9 °C and 164.1 °C if the measured sample gas is the same. However, since the sensitivity of the detector differs, the shape of the vibrational component (non DC component) differs.

Then, the arithmetic processing unit 5 extracts the vibrational component from the interferogram both at 25.9 °C and 164.1 °C and obtains the arithmetic expression at 164.1 °C by comparing the extracted vibrational component. In this case, the relationship between the output value and the light intensity of the photo detector is regarded to be linear based on the arithmetic expression.

In the above-mentioned embodiment, the light of non-linear intensity is produced by the use of the infrared radiation from the measurement cell as the light from other than the light source in order to linearly correct the photo detector, however, the light of non-linear intensity may be produced by the use of an auxiliary light source other than the light source or natural light.

In the above-mentioned embodiment, the output value of the photo detector may be linearly corrected without using the optical filter 6. For example, it can be conceived that the linear output value is obtained by making the light in the linear range enter the photo detector 4 by adjusting the light intensity of the light source 1, and then the non-linear output value is obtained by making the light in the non-linear range enter the photo detector 4 by increasing the light intensity of the light source 1. Then, the arithmetic expression for linearly correction is obtained with the linear output and the non-linear output and the increased light intensity as parameters.

The arithmetic expression may be automatically obtained at each temperature. In this case, the optical analyzer 100 automatically moves the optical filter 6 and raises the temperature of the measurement cell 3.

In addition, the optical filter 6 is made detachable and the arithmetic expression at a predetermined temperature may be obtained by mounting the optical filter 6 only at a time of shipment or maintenance. With regard to other temperature, the arithmetic expression at each temperature may be obtained with a value corrected by the arithmetic expression at the predetermined temperature as the criteria.

The optical element is not limited to the transmission type, and may be a reflection type, and in short, it may be acceptable as far as the wave number property is well-known and the incident light intensity falls within a linear maintaining area of the photo detector.

The photo detector is not limited to the MCT photo detector. This invention can be applied to a photo detector wherein the relationship between the incident light intensity and the output value of the photo detector becomes linear within a predetermined range and non-linear within the other range.

In addition, this invention is not limited to the Fourier-transform type infrared spectroscopy, and the same effect can be obtained if this invention is applied to the spectroscopic analyzer of other type or a spectroscopy (an arrangement to obtain an optical spectrum in the above-mentioned embodiment).

A part of the function of the above-mentioned embodiment may be conducted by a machine learning part wherein an arithmetic processing is conducted by the use of machine learning algorithm.

The present claimed invention is not limited to the above-mentioned embodiment and may be variously modified without departing from a spirit of the invention.

**EXPLANATION OF CODES**

| | |
|---|---|
| 100 | optical analyzer |
| 1 | light source |
| 3 | measurement cell |
| 4 | photo detector |
| 51 | analyzing part |
| 52 | output value obtaining part |
| 53 | arithmetic expression calculation part |
| 7 | temperature adjusting mechanism |

**Claims**

1. An arithmetic expression calculation method that is used for an optical analyzer comprising a photo detector wherein a relationship between intensity of incident light and an output value of the photo detector becomes linear within a predetermined range, wherein

   obtaining a linear output value that is obtained by linearly correcting the output value of the photo detector that detects the light of the first intensity wherein the output of the photo detector becomes non-linear in such a way that the relationship between the output value and the light of the first intensity becomes linear,
   obtaining a non-linear output value as being an output value of the photo detector that detects the light of the second intensity whose output of the photo detector becomes non-linear, and
   obtaining an arithmetic expression to linearly correct the non-linear output value in such a way that a relationship between the non-linear output value and the light of the second intensity becomes linear using the linear output value and the non-linear output value as parameters.

2. The arithmetic expression calculation method described in claim 1, wherein

   the light of the first intensity is light from a light source, and
   the light of the second intensity is a total of the light other than the light from the light source and the light from the light source.

3. The arithmetic expression calculation method described in claim 1, wherein
   the arithmetic expression is obtained for each intensity wherein the output of the photo detector becomes non-linear.

4. The arithmetic expression calculation method described in claim 1, wherein

   the optical analyzer further comprises a light source and a measurement cell on which the light from the light source is irradiated, and
   the light that enters the photo detector is set to be the light of the intensity wherein the output of the photo detector is non-linear by changing the infrared light emitted from the measurement cell by changing the temperature of the measurement cell, and the non-linear output value is obtained in this state.

5. The arithmetic expression calculation method described in claim 1, wherein

   the optical analyzer further comprises an analyzing part that calculates a light intensity signal for each light of multiple predetermined wave numbers contained in the incident light based on the output value obtained by the photo detector, and
   both the linear output value and the non-linear output value are the output value of the photo detector for each light of the multiple predetermined wave numbers contained in the incident light.

6. The arithmetic expression calculation method described in claim 5, wherein
   the arithmetic expression satisfies the following expression in a predetermined range.

$$Y_{linear}(k) = C(y) \cdot Y_{non\text{-}linear}(k)$$

   where k is the wave number, $Y_{linear}(k)$ is the above-mentioned linear output value, $Y_{non\text{-}linear}(k)$ is the non-linear output value, y is the output value of the photo detector and $C(y)$ is the above-mentioned arithmetic expression.

7. The arithmetic expression calculation method described in claim 1 and that obtains the linear output value by the use of an initial arithmetic expression obtained by the following (a) ~ (c) steps.

   (a) The first output value as being an output value of the above-mentioned photo detector for each light of multiple predetermined wave numbers contained in the incident light is obtained by entering the light of the light source into the photo detector through an optical element whose wave number transmission property or wave number reflectance property is known in such a way that the intensity of the light falls within the above-mentioned range.

(b) The second output value as being an output value of the above-mentioned photo detector for each light of the multiple predetermined wave numbers contained in the incident light is obtained by entering the light emitted from the light source into the above-mentioned photo detector without any optical element.

(c) An initial arithmetic expression is obtained to linearly correct the output value of the above-mentioned photo detector that detects the light of the intensity that falls out of the above-mentioned range in such a way that the relationship between the output value and the light of the intensity that falls out of the above-mentioned range becomes linear using a ratio of the first output value to the second output value and the wave number transmission property or the wave number reflectance property of the optical element as the parameters.

8. The arithmetic expression calculation method described in claim 7 and that satisfies the following expression in a predetermined range.

$$Y_1(k) / \{C(y) \bullet Y_2(k)\} = F(k)$$

where k is the wave number, $Y_1(k)$ is the above-mentioned first output value, $Y_2(k)$ is the above-mentioned second output value, $F(k)$ is the wave number transmission property or the wave number reflectance property of the above-mentioned optical element, y is the output value of the photo detector and $C(y)$ is the above-mentioned arithmetic expression.

9. An output correction method of a photo detector comprising

an arithmetic expression calculation step to calculate the arithmetic expression by the arithmetic expression calculation method described in claim 1 and
a correction step to linearly correct the output of the photo detector by the use of the arithmetic expression obtained in the arithmetic expression calculation step.

10. An optical analyzer that comprises a photo detector wherein a relationship between intensity of incident light and an output value of the photo detector becomes linear in a predetermined range, and further comprising

an output value obtaining part that obtains a linear output value obtained by linearly correcting the output value of the photo detector that detects the light of the first intensity wherein the output of the photo detector is non-linear in such a way that the relationship between the output value and the light of the first intensity becomes linear and that obtains a non-linear output value as being the output value of the photo detector that detects the light of the second intensity wherein the output of the photo detector becomes non-linear, and
an arithmetic expression calculation part that calculates an arithmetic expression to calculate an output value in case that the photo detector linearly outputs the light of the intensity to be the non-linear output by correcting the non-linear output value using the linear output value and the non-linear output value as parameters.

11. The optical analyzer described in claim 10, further comprising

a light source,
a measurement cell on which the light from the light source is irradiated, and
a temperature adjusting mechanism to adjust temperature of the measurement cell, wherein the light that enters the photo detector is set to be the light of the intensity wherein the output of the photo detector is non-linear by changing the infrared light emitted from the measurement cell by changing the temperature of the measurement cell by the use of the temperature adjusting mechanism, and the output value obtaining part obtains the non-linear output value in this state.

12. The optical analyzer described in claim 10, further comprising
a correcting part that linearly corrects the output of the photo detector by the use of the arithmetic expression obtained in the arithmetic expression calculation part.

Y AXIS: OUTPUT OF DETECTOR

X AXIS: INTENSITY OF INCIDENT LIGHT (RELATIVE VALUE)

IN CASE INCIDENT LIGHT INTENSITY IS SMALL, ALMOST LINEAR

IN CASE INCIDENT LIGHT INTENSITY BECOMES BIG, STRONG NON-LINEAR TENDENCY

FIG. 1

Y AXIS: SIGNAL INTENSITY

X AXIS: POSITION OF
MOVING MIRROR OF
INTERFEROMETER

(a) CELL TEMPERATURE: 25.9℃

Y AXIS: SIGNAL INTENSITY

X AXIS: POSITION OF
MOVING MIRROR OF
INTERFEROMETER

(b) CELL TEMPERATURE: 164.1℃

FIG. 2

100

1

2

23

21

3

6

4

22

7

POSITION OF FILTER

PHOTO DETECTOR
OUTPUT VALUE

POSITION OF
MOVING MIRROR

5

55

TEMPERATURE
ADJUSTING
MECHANISM
CONTROL PART

51 ANALYZING
PART

52 OUTPUT VALUE
OBTAINING
PART

54 DATA
STORING
PART

53 ARITHMETIC
EXPRESSION
CALCULATION
PART

FIG. 3

START

ADJUST TEMPERATURE OF MEASUREMENT CELL
AT 25.9 °C — S1

OBTAIN
FIRST OUTPUT VALUE AND SECOND OUTPUT VALUE
BY INSERTION OR EXTRACTION OF OPTICAL FILTER — S2

CALCULATE ARITHMETIC EXPRESSION AT 25.9 °C
BASED ON FIRST OUTPUT VALUE, SECOND OUTPUT
VALUE, AND PROPERTY OF OPTICAL FILTER — S3

OBTAIN LINEAR OUTPUT VALUE
FROM OUTPUT VALUE AT 25.9 °C AND
INITIAL ARITHMETIC EXPRESSION — S4

RAISE TEMPERATURE OF MEASUREMENT CELL
FROM 25.9 °C TO 164.1 °C — S5

OBTAIN
OUTPUT VALUE (NON-LINEAR OUTPUT VALUE)
AT 164.1 °C — S6

CALCULATE ARITHMETIC EXPRESSION AT 164.1 °C
FROM LINEAR OUTPUT VALUE AND
NON-LINEAR OUTPUT VALUE — S7

END

FIG. 4

FIG. 5

(a) OUTPUT VALUE WITHOUT LINEAR CORRECTION

Y AXIS: SIGNAL INTENSITY (a.u.)
X AXIS: WAVE NUMBER k (cm$^{-1}$)

(b) OUTPUT VALUE WITH LINEAR CORRECTION

Y AXIS: SIGNAL INTENSITY (a.u.)
X AXIS: WAVE NUMBER k (cm$^{-1}$)

SIGNAL APPEARS IN WAVE LENGTH AREA
WHERE NO SENSITIVITY OF DETECTOR

FIG. 6

EP 3 415 881 A1

Europäisches
Patentamt

European
Patent Office

Office européen
des brevets

# EUROPEAN SEARCH REPORT

Application Number

EP 18 17 7028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 3 133 380 A1 (HORIBA LTD [JP]) 22 February 2017 (2017-02-22) * paragraphs [0005] - [0012], [0052] - [0062]; claims 1,2; figures 1,2,6 * ----- | 1-12 | INV. G01J3/02 G01J3/28 G01J3/45 |
| A | JP H11 23367 A (JASCO CORP) 29 January 1999 (1999-01-29) * abstract; figures 4,7 * ----- | 1-12 | |
| A | US 6 359 278 B1 (GRAHAM JAMES E [US]) 19 March 2002 (2002-03-19) * column 3, line 20 - column 4, line 65 * ----- | 1-12 | |

TECHNICAL FIELDS
SEARCHED      (IPC)

G01J

The present search report has been drawn up for all claims

| Place of search | Date of completion of the search | Examiner |
|---|---|---|
| Munich | 5 November 2018 | Schmidt, Charlotte |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 17 7028

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2018

| Patent document cited in search report | | Publication date | Patent family member(s) | | Publication date |
|---|---|---|---|---|---|
| EP 3133380 | A1 | 22-02-2017 | CN<br>EP<br>JP<br>US | 106370303 A<br>3133380 A1<br>2017026506 A<br>2017023408 A1 | 01-02-2017<br>22-02-2017<br>02-02-2017<br>26-01-2017 |
| JP H1123367 | A | 29-01-1999 | JP<br>JP | 3660472 B2<br>H1123367 A | 15-06-2005<br>29-01-1999 |
| US 6359278 | B1 | 19-03-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017026506 A